# EUROPEAN PATENT SPECIFICATION

(11) **EP 1 873 193 B1**
(45) Date of publication and mention of the grant of the patent: **05.09.2018**
(21) Application number: 06730293.5
(22) Date of filing: 28.03.2006
(51) Int. Cl.: C08J 9/00, B29C 55/02, B01D 67/00, B01D 69/02, B01D 71/26, B29K 23/00, B29K 105/04, C08J 5/18, H01M 2/14, H01M 2/16, H01M 10/052, H01M 10/42, B29C 55/00

(54) **PROCESS FOR PRODUCING MICROPOROUS POLYOLEFIN FILM AND MICROPOROUS POLYOLEFIN FILM**
VERFAHREN ZUR HERSTELLUNG EINER MIKROPORÖSEN POLYETHYLENFOLIE UND MIKROPORÖSE POLYETHYLENFOLIE
PROCEDE POUR LA FABRICATION DE FILM DE POLYOLEFINE MICROPOREUX ET FILM DE POLYOLEFINE MICROPOREUX

(30) Priority: 29.03.2005 JP 2005095649
(43) Date of publication of application: 02.01.2008
(73) Proprietor: Toray Industries, Inc., Tokyo (JP)
(72) Inventor: TAKITA, Kotaro, Tochigi, 3292735 (JP); YAMADA, Kazuhiro, Nasushiobara-shi Tochigi, 3292732 (JP); KAIMAI, Norimitsu, Kanagawa, 2300074 (JP); NAKAMURA, Teiji, Suginami-ku Tokyo, 1670031 (JP); KONO, Koichi, Asaka-shi Saitama, 3510025 (JP)
(74) Representative: Strehl Schübel-Hopf & Partner
(86) International application number: PCT/JP2006/306345
(87) International publication number: WO 2006/104165

(56) References cited:
- EP-A2- 0 301 625
- JP-A- 01 053 827
- JP-A- 06 240 036
- JP-A- 10 237 201
- JP-A- 11 060 789
- JP-A- 2003 105 121

## Description

### FIELD OF THE INVENTION

The present invention relates to a method for producing a microporous polyolefin membrane having excellent compression resistance usable for battery separators, and a microporous membrane produced thereby.

### BACKGROUND OF THE INVENTION

Microporous polyethylene membranes are used for various applications such as battery separators, diaphragms for electrolytic capacitors, various filters, water-vapor-permeable and waterproof clothing materials, reverse osmosis filtration membranes, ultra filtration membranes, micro filtration membranes, etc. When microporous polyethylene membrane is used for battery separators, particularly a lithium ion battery separator, its performance largely affects the properties, productivity and safety of batteries. Accordingly, the microporous polyethylene membrane is required to have excellent permeability, mechanical properties, heat shrinkage resistance, shutdown properties, meltdown properties, etc.

As a method for improving the properties of microporous polyethylene membranes, a method for optimizing material compositions, stretching temperatures, stretching magnifications, heat treatment conditions, etc. has been proposed. As a method for producing a microporous polyolefin membrane having a proper pore diameter, a sharp pore diameter distribution and excellent mechanical strength, the applicant proposed, in JP 6-240036 A, a method comprising the steps of melt-blending (a) polyethylene having a molecular weight distribution (weight-average molecular weight/number-average molecular weight) of 10 to 300, which contains 1% or more by mass of a component having a molecular weight of 7 x 10⁵ or more, and (b) a membrane-forming solvent; extruding the resultant melt blend through a die; cooling the resultant extrudate to form a gel molding; stretching the gel molding at least uniaxially at temperatures ranging from the crystal dispersion temperature of polyethylene to the melting point of polyethylene +10°C; removing the membrane-forming solvent from the stretched gel molding; heat-setting the resultant membrane at temperatures ranging from the crystal dispersion temperature of the above polyethylene to the melting point of the above polyethylene; and stretching the heat-set membrane again at least uniaxially at temperatures equal to or lower than the melting point of the above polyethylene -10°C.

Increasingly important recently as the properties of separators are not only permeability and mechanical strength, but also properties related to battery life such as battery cyclability and properties related to battery productivity such as electrolytic solution absorption. Particularly in the case of lithium ion batteries, electrodes expand and shrink according to intrusion and departure of lithium, and their expansion ratios have become larger recently because of increase in battery capacity. Because separators are compressed when the electrodes expand, the separators are required to suffer as little change as possible in air permeability by compression, to be so deformable as to absorb the expansion of electrodes, etc. With large air permeability change or small deformation by compression, a microporous membrane used as a separator tends to provide a battery with small capacity and low cyclability.

Thus, as a method for producing a microporous polyolefin membrane having well-balanced porosity, air permeability, pin puncture strength, a heat shrinkage ratio and compression resistance, the applicant proposed in JP 2004-83866 A, a method comprising the steps of (1) stretching a gel molding comprising a polyolefin and a membrane-forming solvent simultaneously biaxially in both longitudinal and transverse directions, (2) re-stretching it at a temperature higher than this stretching temperature, and (3) removing the membrane-forming solvent from the resultant stretched molding, both of λ₁ₜ/λ₂ₘ and λ₁ₘ/λ₂ₜ being in a range of more than 1 and 10 or less, wherein λ₁ₜ and λ₁ₘ represent simultaneous biaxial stretching magnifications in transverse and longitudinal directions, respectively, and λ₂ₜ and λ₂ₘ represent re-stretching magnifications in transverse and longitudinal directions, respectively. However, the microporous membrane obtained by this method has insufficient compression resistance.

JP 2003-105121A discloses a method for producing a microporous polyolefin membrane comprising the steps of (1) melt-blending a polyolefin and a membrane-forming solvent, (2) extruding the resultant melt blend, (3) cooling the extrudate to form a gel molding, (4) stretching the gel molding at least uniaxially, (5) removing the membrane-forming solvent, and (6) re-stretching the resultant membrane at least uniaxially, wherein the re-stretching temperature is in the range from the crystal dispersion temperature of the polyolefin to lower than the melting point of the polyolefin. JP 11-060789A discloses a method for producing a microporous polyolefin membrane comprising the same steps (1) to (6) as above, except that the re-stretching temperature is in the range from 50°C below the melting point of the polyolefin to lower than the melting point. Neither JP 2003-105121A nor JP 11-060789A refer to the re-stretching speed.

JP 10-237201A discloses a method for producing a porous high-molecular-weight polyolefin film comprising the steps of (1) molding a high-molecular-weight polyolefin into a non-permeable film precursor, (2) subjecting the film precursor to a first stretching to form a porous film, and (3) subjecting the porous film to a second stretching and an annealing to fix the porous structure, wherein the second stretching is conducted to a magnification of 110 to 300% of the length before the second stretching and at a temperature of higher than the crystal dispersion temperature and at a speed of 100%/min or less.

JP 01-053827A discloses a process for producing a thin stretched polyolefin film comprising the steps of (1) dissolving an ultra-high-molecular-weight polyolefin in a solvent, (2) molding the resultant solution into a tape, (3) cooling the tape to form a gelled tape, (4) subjecting the gelled tape to a preliminary stretching in one direction while removing the solvent, (5) stretching the tape in a direction substantially perpendicular to the direction of the preliminary stretching and at elevated temperature, and (6) subjecting the tape to a final stretching, wherein the stretching step (5) is carried out at speeds ranging from 1%/second to 1,000%/second. However, the stretched polyolefin film is free from pores.

### OBJECTS OF THE INVENTION

Accordingly, an object of the present invention is to provide a method for producing a microporous polyolefin membrane having excellent compression resistance.

Another object of the present invention is to provide such a microporous polyolefin membrane.

### DISCLOSURE OF THE INVENTION

The afore-said objects are solved by a method in accordance with claim 1 and a microporous polyolefin membrane in accordance with claim 4. The dependent claims relate to preferred embodiments of the invention.

In order to stabilize crystals and make lamellas uniform in the microporous membrane, heat-setting is preferably conducted at a temperature equal to or lower than the melting point of the polyolefin +10°C after the re-stretching. Annealing may be conducted after the re-stretching, such that the re-stretched membrane shrinks to 91% or more in the re-stretching direction, resulting in further improved balance of permeability and heat shrinkage resistance.

### DESCRIPTION OF THE PREFERRED EMBODIMENTS

### [1] Polyolefin

Polyolefin (PO) may be a single PO or a composition comprising two or more POs. Though not particularly restricted, the weight-average molecular weight (Mw) of the PO is generally 1 x 10⁴ to 1 x 10⁷, preferably 1 x 10⁴ to 15 x 10⁶, more preferably 1 x 10⁵ to 5 x 10⁶.

The PO preferably includes polyethylene (PE). The PE may include ultra-high-molecular-weight polyethylene (UHMWPE), high-density polyethylene (HDPE), middle-density polyethylene (MDPE) and low-density polyethylene (LDPE). These PEs may be not only ethylene homopolymers, but also copolymers having small amounts of other α-olefins. The other α-olefins than ethylene preferably include propylene, butene-1, hexene-1, pentene-1, 4-methylpentene-1, octene, vinyl acetate, methyl methacrylate, styrene, etc.

Though the PE may be a single PE, it is preferably a composition of two or more PEs. The PE composition may be a composition of two or more UHMWPEs having different Mws, a composition of similar HDPEs, a composition of similar MDPEs, or a composition of similar LDPEs, and it may be a composition comprising two or more PEs selected from the group consisting of UHMWPE, HDPE, MDPE and LDPE.

The PE composition is preferably composed of a UHMWPE having Mw of 5 x 10⁵ or more and a PE having Mw of 1 x 10⁴ or more and less than 5 x 10⁵. The Mw of the UHMWPE is preferably 5 x 10⁵ to 1 x 10⁷, more preferably 1 x 10⁶ to 15 x 10⁶, most preferably 1 x 10⁶ to 5 x 10⁶. The PE having Mw of 1 x 10⁴ or more and less than 5 x 10⁵ may be any of HDPE, MDPE and LDPE, though HDPE is preferable. The PE having Mw of 1 x 10⁴ or more and less than 5 x 10⁵ may be composed of two or more PEs having different Mws, or two or more PEs having different densities. With the upper limit of Mw of 15 x 10⁶, the PE composition is easily melt-extruded. The percentage of the UHMWPE in the PE composition is preferably 1% or more by mass, more preferably 10 to 80% by mass, based on 100% by mass of the entire PE composition.

Though not particularly restricted, the ratio of Mw/Mn (molecular weight distribution) of the PO, wherein Mn represents a number-average molecular weight, is preferably 5 to 300, more preferably 10 to 100. When the Mw/Mn is less than 5, the percentage of a high-molecular-weight component is too high to melt-extrude the PO solution easily. When the Mw/Mn is more than 300, the percentage of a low-molecular-weight component is too high, resulting in decrease in the strength of the microporous PO membrane. The Mw/Mn is used as a measure of a molecular weight distribution; the larger this value, the wider the molecular weight distribution. That is, the Mw/Mn of a single PO indicates its molecular weight distribution; the larger the value, the wider its molecular weight distribution. The Mw/Mn of a single PO can be properly controlled by a multi-stage polymerization. The multi-stage polymerization method is preferably a two-stage polymerization method comprising forming a high-molecular-weight polymer component in the first stage and forming a low-molecular-weight polymer component in the second stage. When the PO is a composition, a larger Mw/Mn means a larger difference of Mw between its components, and a smaller Mw/Mn means a smaller difference of Mw between them. The Mw/Mn of a PO composition can be properly controlled by adjusting the molecular weights and/or percentages of the components.

When the microporous PO membrane is used for a battery separator, the PO may contain polypropylene (PP) in addition to PE to raise the meltdown temperature of the separator and to improve the high-temperature-reserve-properties of the battery. The Mw of the PP is preferably 1 x 10⁴ to 4 x 10⁶. The PP may be a homopolymer, or a block copolymer and/or a random copolymer having the other α-olefin. The other α-olefin is preferably ethylene. The additional amount of PP is preferably 80% or less by mass based on 100% by mass of the entire PO composition (PE + PP).

To improve properties needed when used for battery separators, the PO may contain a PO component capable of imparting a shutdown function to a separator. Such shutdown-function-imparting PO component may be, for instance, LDPE. LDPE is preferably at least one selected from the group consisting of branched LDPE, linear LDPE (LLDPE), ethylene/α-olefin copolymer produced using a single-site catalyst, and low-molecular-weight PE having Mw of 1 x 10³ to 4 x 10³. The amount of the shutdown-function-imparting PO added is preferably 20% or less by mass based on 100% by mass of the entire PO. The addition of too much shutdown-function-imparting PO highly likely causes the rupture of the microporous PO membrane when stretched.

At least one optional component selected from the group consisting of polybutene-1 having Mw of 1 x 10⁴ to 4 x 10⁶, PE wax having Mw of 1 x 10³ to 4 x 10⁴ and ethylene/α-olefin copolymer having Mw of 1 x 10⁴ to 4 x 10⁶ may be added to a PE composition comprising the above UHMWPE. The amount of these optional components added is preferably 20% or less by mass based on 100% by mass of the entire PO composition.

### [2] Production method of microporous polyolefin membrane

The method of the present invention for producing a microporous PO membrane comprises the steps of (1) adding a membrane-forming solvent to the above PO, and melt-blending the PO and the membrane-forming solvent to prepare a PO solution, (2) extruding the PO solution through a die lip and cooling the extrudate to form a gel molding, (3) stretching the gel molding at least uniaxially (first stretching), (4) removing the membrane-forming solvent, (5) drying the resultant membrane, and (6) re-stretching the dried membrane at least uniaxially (second stretching). If necessary, the method may further comprise a heat treatment step (7), a cross-linking step with ionizing radiations (8), a hydrophilizing step (9), a surface-coating step (10), etc., after the steps (1) to (6).

### (1) Preparation of polyolefin solution

PO is melt-blended with a proper membrane-forming solvent to prepare a PO solution. The PO solution, if necessary, may contain various additives such as antioxidants, ultraviolet absorbents, antiblocking agents, pigments, dyes, inorganic fillers, etc. in ranges not deteriorating the effects of the present invention. A fine silicate powder, for instance, may be added as a pore-forming agent.

The membrane-forming solvent may be liquid or solid. The liquid solvents may be aliphatic or cyclic hydrocarbons such as nonane, decane, decalin, p-xylene, undecane, dodecane, liquid paraffin, etc.; and mineral oil distillates having boiling points corresponding to those of the above hydrocarbons. To obtain a gel molding having a stable liquid solvent content, non-volatile liquid solvents such as liquid paraffin are preferable. The solid solvent preferably has boiling point of 80°C or lower. Such a solid solvent is paraffin wax, ceryl alcohol, stearyl alcohol, dicyclohexyl phthalate, etc. The liquid solvent and the solid solvent may be used in combination.

The viscosity of the liquid solvent is preferably 30 to 500 cSt, more preferably 50 to 200 cSt, at 25°C. When the viscosity is less than 30 cSt, the PO solution is unevenly extruded through a die lip, resulting in difficulty in blending. The viscosity of more than 500 cSt makes the removal of the liquid solvent difficult.

Though not particularly restricted, the melt-blending method preferably comprises even melt-blending in an extruder. This method is suitable for preparing a high-concentration PO solution. The melt-blending temperature of the PO is preferably in a range of the melting point of PO +10°C to +100°C. Specifically, the melt-blending temperature is preferably 140 to 250°C, more preferably 170 to 240°C. The melting point is measured by differential scanning calorimetry (DSC) according to JIS K7121. The membrane-forming solvent may be added before blending, or charged into the extruder during blending, though the latter is preferable. In the melt-blending, an antioxidant is preferably added to prevent the oxidization of PO.

In the PO solution, the percentage of PO is 1 to 50% by mass, preferably 20 to 40% by mass, based on 100% by mass of the total amount of PO and the membrane-forming solvent. Less than 1% by mass of PO causes large swelling and neck-in at the die exit during extruding, resulting in decrease in the formability and self-supportability of the gel molding. More than 50% by mass of PO deteriorates the formability of the gel molding.

### (2) Formation of gel molding

The melt-blended PO solution is extruded through the die of the extruder directly or through a die of another extruder. Alternatively, the melt-blended PO solution may be pelletized and then re-extruded through a die of another extruder. The die lip is generally a sheet-forming die lip having a rectangular mouth-shape, but may be a hollow die lip having a double-tube shape, an inflation die lip, etc. The sheet-forming die lip generally has a gap of 0.1 to 5 mm. The sheet-forming die lip is generally heated at 140 to 250°C when extruding. The extrusion speed of the heated solution is preferably 0.2 to 15 m/minute.

The solution thus extruded through the die lip is cooled to form a gel molding. Cooling is preferably conducted at a speed of 50°C/minute or more until reaching a gelation temperature. Such cooling sets a structure in which the PO phase is micro-phase-separated by the membrane-forming solvent, namely a gel structure of the PO phase and the membrane-forming solvent phase. Cooling is preferably conducted to 25°C or lower. The slower cooling rate generally leads to larger pseudo-cell units, resulting in a coarser higher-order structure of the resultant gel molding. On the other hand, the higher cooling rate leads to denser cell units. The cooling rate less than 50°C/minute causes increase in crystallinity, making it unlikely to provide the gel molding with suitable stretchability. Usable as the cooling method are a method of bringing the extrudate into contact with a cooling medium such as cooling air, cooling water, etc., a method of bringing the extrudate into contact with a cooling roll, etc.

### (3) First stretching

The resultant gel molding in a sheet form is stretched at least uniaxially. The stretching causes cleavage between PO crystal lamellas, making the PO phases finer and forming a large number of fibrils. The fibrils form a three-dimensional network structure (an irregularly, three-dimensionally combined network structure). The gel molding can be evenly stretched because it contains the membrane-forming solvent. The first stretching of the gel molding may be conducted after heated to a predetermined magnification by a typical tenter method, a roll method, an inflation method, a rolling method or a combination thereof. The first stretching may be uniaxial or biaxial, though is preferably biaxial. The biaxial stretching may be simultaneous biaxial stretching or sequential stretching, though the simultaneous biaxial stretching is preferable.

Though the stretching magnification varies according to the thickness of the gel molding, it is preferably 2 folds or more, more preferably 3 to 30 fold in the case of uniaxial stretching. The magnification of biaxial stretching is preferably 3 folds or more in any direction, namely 9 folds in area magnification, to improve the pin puncture strength. When the area magnification is less than 9 folds, the stretching is so insufficient to obtain a high-elastic and high-strength microporous PO membrane. When the area magnification is more than 400 folds, restrictions occur on stretching apparatuses, stretching operations, etc.

The first stretching temperature is preferably equal to or lower than the melting point of PO +10°C, more preferably in a range of the crystal dispersion temperature or higher and lower than the melting point. When the stretching temperature is higher than the melting point +10°C, stretching does not orient molecular chains because the resin melts. When the stretching temperature is lower than the crystal dispersion temperature, the gel molding is so insufficiently softened that it is likely broken by stretching, failing to achieve even stretching. The crystal dispersion temperature is determined by measuring the temperature characteristics of dynamic viscoelasticity according to ASTM D 4065. The crystal dispersion temperature of PE is generally 90 to 100°C. When the PO is composed of PE, therefore, the stretching temperature is generally 90 to 140°C, preferably 100 to 130°C.

Depending on the desired properties, the gel molding in a sheet form may be stretched with a temperature distribution in a thickness direction to provide the resultant microporous PO membrane with further improved mechanical strength. Usable for this stretching, for instance, is a method disclosed by JP7-188440A.

### (4) Removal of membrane-forming solvent

The membrane-forming solvent is removed (washed away) using a washing solvent. Because the PO phase is separated from the membrane-forming solvent, the microporous membrane is obtained by removing of the membrane-forming solvent. The washing solvents may be well-known solvents, for instance, chlorinated hydrocarbons such as methylene chloride, carbon tetrachloride, etc.; hydrocarbons such as pentane, hexane, heptane, etc.; fluorohydrocarbons such as trifluoroethane, etc.; ethers such as diethyl ether, dioxane, etc.; volatile solvents such as methyl ethyl ketone. Further usable is a washing solvent having a surface tension of 24 mN/m or less at 25°C described by JP2002-256099A. When a washing solvent having such a surface tension is removed by drying, the shrinkage of the network structure is less likely to occur by tensions in gas-liquid interfaces inside pores. Accordingly, the microporous membrane is provided with further improved porosity and permeability.

The stretched membrane can be washed by immersion in the washing solvent and/or the showering of the washing solvent. The washing solvent used is preferably 300 to 30,000 parts by mass per 100 parts by mass of the membrane. The washing temperature is usually 15 to 30°C, and the membrane may be heated, if necessary, during washing. The heat-washing temperature is preferably 80°C or lower. The membrane is preferably washed until the amount of the remaining membrane-forming solvent becomes less than 1% by mass of that added.

### (6) Drying of membrane

The membrane obtained by stretching the gel molding and removing the membrane-forming solvent is then dried by a heat-drying method, a wind-drying method, etc. The drying temperature is preferably equal to or lower than the crystal dispersion temperature of PO, more particularly 5°C or more lower than the crystal dispersion temperature.

The percentage of the remaining washing solvent in the microporous membrane after drying is preferably 5% or less by mass, more preferably 3% or less by mass, based on 100% by mass of the dried membrane. When drying is so insufficient that a large amount of the washing solvent remains in the membrane, the porosity of the membrane is lowered by subsequent second stretching and heat treatment, resulting in deteriorated permeability.

### (7) Second stretching

The dried membrane is re-stretched at least uniaxially. The second stretching may be conducted by a tenter method, etc. like the first stretching while heating the membrane. The second stretching may be uniaxial or biaxial. The biaxial stretching may be any one of simultaneous biaxial stretching and sequential stretching, though the simultaneous biaxial stretching is preferable.

The second stretching temperature is preferably equal to or lower than the crystal dispersion temperature of PO forming the microporous membrane +20°C, more preferably equal to or lower than the crystal dispersion temperature +15°C. The lower limit of the second stretching temperature is preferably the crystal dispersion temperature of PO. When the second stretching temperature is more than the crystal dispersion temperature +20°C, the microporous membrane has low compression resistance, and large unevenness of properties (particularly air permeability) in a sheet-width direction when stretched in TD. When the second stretching temperature is lower than the crystal dispersion temperature, the PO is so insufficiently softened that it is likely broken by stretching, failing to achieve even stretching. When the PO is composed of PE, the stretching temperature is generally 90 to 120°C, preferably 95 to 115°C.

The second stretching speed needs to be 10 %/second or more and 50 %/second or less in the stretching direction. The uniaxial stretching speed is 10 %/second or more either in a longitudinal direction (machine direction; MD) or in a transverse direction (transverse direction; TD). The biaxial stretching speed is 10 %/second or more in both MD and TD. The biaxial stretching may be simultaneous, sequential or multi-stage. The multi-stage stretching is, for instance, a combination of the simultaneous biaxial stretching and the sequential stretching. The stretching speed (%/second) is represented by the elongation (percentage) of the membrane (sheet) per 1 second in the stretching direction, assuming that the length of the membrane before second stretching is 100%. The stretching speed of less than 3%/second fails to improve compression resistance and the evenness of properties (particularly air permeability) in a width direction when stretched in TD, accompanied by unrealistically low productivity. The biaxial stretching speed may be different in MD and TD as long as it is 10 %/second or more in both MD and TD, though the same speed is preferable. The upper limit of the second stretching speed is 50%/second, to prevent the rupture of the membrane.

The second stretching magnification in one direction is 1.1 to 2.5 fold. For instance, the magnification of the uniaxial stretching is 1.1 to 2.5 fold in MD or TD. The magnifications of the biaxial stretching are 1.1 to 2.5 fold in MD and TD, respectively. The magnifications of the biaxial stretching may be the same or different in MD and TD as long as the magnifications in both MD and TD are within 1.1 to 2.5 fold, though the same magnification is preferable. When the magnification is less than 1.1 folds, the compression resistance is insufficient. When the magnification is more than 2.5 folds, the membrane undesirably tends to be easily broken and have low heat shrinkage resistance. The stretching magnification is more preferably 1.1 to 2.0 fold.

Though not restricted, it is preferable to use an inline method in which the first stretching step, the step of removing a membrane-forming-solvent, the drying step and the second stretching step are continuously conducted in one line. However, an offline method in which the dried membrane is once wound and then unwound to conduct the second stretching may be used, if necessary.

### (8) Heat treatment

The second-stretched membrane is preferably subjected to a heat treatment. The heat treatment stabilizes crystals and makes lamellas uniform in the microporous membrane. The heat treatment may be heat-setting and/or annealing, which are properly selectable depending on the desired properties of the microporous membrane, though the heat-setting is preferable. The heat-setting is conducted by a tenter method, a roll method or a rolling method. The heat-setting temperature is preferably equal to or lower than the melting point of PO forming the microporous PO membrane +10°C, more preferably in a range from the crystal dispersion temperature to the melting point.

The annealing is conducted by a tenter method, a roll method, a rolling method, a belt conveyor method or a floating method. The annealing temperature is equal to or lower than the melting point of the microporous PO membrane, more preferably in a range from 60°C to the melting point -5°C. The shrinkage of the membrane by annealing is suppressed such that the length of the annealed membrane in the second stretching direction is preferably 91% or more, more preferably 95% or more, of the length before the second stretching. Such annealing provides well-balanced strength and permeability to the membrane. The shrinkage to less than 91% deteriorates the balance of properties, particularly permeability, in the width direction after the second stretching. The heating treatment may be a combination of many heat-setting steps and many annealing steps.

### (9) Cross-linking of membrane

The second-stretched microporous membrane may be cross-linked by ionizing radiation. The ionizing radiation rays may be α-rays, β-rays, γ-rays, electron beams, etc. The cross-linking by ionizing radiation may be conducted with electron beams of 0.1 to 100 Mrad and at accelerating voltage of 100 to 300 kV. The cross-linking treatment can elevate the meltdown temperature of the membrane.

### (10) Hydrophilizing

The second-stretched microporous membrane may be hydrophilized. The hydrophilizing treatment may be a monomer-grafting treatment, a surfactant treatment, a corona-discharging treatment, a plasma treatment, etc. The monomer-grafting treatment is preferably conducted after ionizing radiation.

The surfactants may be any of nonionic surfactants, cationic surfactants, anionic surfactants and amphoteric surfactants, though the nonionic surfactants are preferable. The microporous membrane is hydrophilized by dipped in a solution of the surfactant in water or a lower alcohol such as methanol, ethanol, isopropyl alcohol, etc., or by coated with the solution by a doctor blade method.

The hydrophilized microporous membrane is dried. To provide the microporous PO membrane with improved permeability, it is preferable to conduct heat treatment at a temperature equal to or lower than the melting point of the polyolefin microporous membrane while preventing its shrinkage during drying. For such shrinkage-free heat treatment, for instance, the above-described heat treatment method may be conducted on the hydrophilized microporous membrane.

### (11) Coating

The second-stretched microporous membrane may be coated with PP; a porous body of fluororesins such as polyvinylidene fluoride, polytetrafluoroethylene, etc.; a porous body of polyimide, polyphenylene sulfide, etc., to have high meltdown properties when used as battery separators. The coating PP preferably has Mw in a range from 5,000 to 500,000 and solubility of 0.5 g or more per 100 g of toluene at 25°C. This PP preferably has a racemic diad fraction of 0.12 to 0.88. The racemic diad means a pair of polymer-constituting units enantiomeric to each other.

### [3] Microporous polyolefin membrane

The microporous membrane according to a preferred embodiment of the present invention has the following properties.
(1) It has air permeability (Gurley value) of 20-400 seconds/100 cm³ (converted to the value at 20-µm thickness). When the microporous membrane is used as battery separators, the air permeability in this range provides batteries with large capacity and good cyclability. The air permeability of less than 20 seconds/100 cm³/20 µm causes insufficient shutdown during temperature elevation in batteries.
(2) It has porosity of 25-80%. When the porosity is less than 25%, excellent air permeability is not obtained. When the porosity exceeds 80%, battery separators formed by the microporous membrane have insufficient strength, resulting in large likelihood of short-circuiting of electrodes.
(3) It has pin puncture strength of 1,500 mN/20 µm or more. When the pin puncture strength is less than 1,500 mN/20 µm, short-circuiting is likely to occur in batteries with separators formed by the microporous membrane. The pin puncture strength is preferably 3,000 mN/20 µm or more.
(4) It has tensile rupture strength of 20,000 kPa or more in both MD and TD, so that it is unlikely to be broken. The tensile rupture strength is preferably 100,000 kPa or more in both MD and TD.
(5) It has tensile rupture elongation of 100% or more in both MD and TD, so that it is unlikely to be broken.
(6) It has a heat shrinkage ratio of 15% or less in both MD and TD after exposed to 105°C for 8 hours. When the heat shrinkage ratio exceeds 15%, heat generated in lithium batteries with separators formed by the microporous membrane causes the shrinkage of the separator edges, making it highly likely that short-circuiting of electrodes occurs. The heat shrinkage ratio is preferably 10% or less in both MD and TD.
(7) It has air permeability difference of 20% or less in TD. The permeability difference is represented by difference between the maximum value and the minimum value of air permeability (Gurley value) of the microporous membrane measured at 15 points with an approximately equal interval in TD, assuming that the minimum value is 100%.
(8) It has an air permeability ratio of 1.5 or less, preferably 1.3 or less, in TD. The air permeability ratio is represented by a ratio of the above-mentioned maximum value to the above-mentioned minimum value.
(9) It has a thickness change ratio of 15% or more after heat compression at 90°C and 2.2 MPa (22 kgf/cm²) for 5 minutes. When the thickness change ratio is 15% or more, batteries with separators formed by the microporous membrane have good absorbability of electrode expansion, large capacity and good cyclability.
(10) Its air permeability increment ratio [%, relative to the air permeability (100%) before heat compression] is 120% or less after heat compression under the above-mentioned conditions. With the air permeability increment ratio of 120% or less, batteries having separators formed by the microporous membrane is provided with large capacity and good cyclability.
(11) It has post-heat-compression air permeability (converted to the value at 20-µm thickness) of 700 seconds/100 cm³ or less. The post-heat-compression air permeability is air permeability (Gurley value) after heat compression under the above-mentioned conditions. Batteries with separators formed by the microporous membrane having post-heat-compression air permeability of 700 seconds/100 cm³/20 µm or less have large capacity and good cyclability. The post-heat-compression air permeability is preferably 650 seconds/100 cm³/20 µm or less.

As described above, the microporous membrane obtained by the method of the present invention has excellent air permeability, mechanical strength, heat compression resistance, compression resistance, thereby being suitable for battery separators, various filters, etc. Though properly selectable depending on its use, the thickness of the microporous membrane used for battery separators is preferably 5 to 50 µm, more preferably 10 to 35 µm.

The present invention will be explained in more detail referring to Examples below without intention of restricting the scope of the present invention.

### Example 1

100 parts by mass of PE composition having Mw/Mn of 16, a melting point of 135°C and a crystal dispersion temperature of 100°C, which comprised 20% by mass of UHMWPE having Mw of 2.0 x 10⁶ and Mw/Mn of 8 and 80% by mass of HDPE having Mw of 3.5 x 10⁵ and Mw/Mn of 13.5, was mixed with 0.375 parts by mass of tetrakis

[methylene-3-(3,5-ditertiary-butyl-4-hydroxyphenyl)-propionate] methane as an antioxidant. 30 parts by mass of the PE composition was charged into a strong-blending double-screw extruder having an inner diameter of 58 mm and L/D of 42, and 70 parts by mass of liquid paraffin was supplied to the double-screw extruder via a side feeder. Melt-blending was conducted at 210°C and 200 rpm to prepare a PE solution in the extruder. The PE solution was then extruded from a T-die mounted to a tip end of the extruder to form a sheet having a thickness of 1.1 mm, which was pulled by cooling rolls controlled at 40°C to form a gel molding. The gel molding was simultaneously biaxially stretched to 5 x 5 folds by a tenter-stretching machine at 114°C. The stretched membrane was fixed to an aluminum frame of 20 cm x 20 cm, and immersed in a bath of methylene chloride controlled at 25°C for washing with vibration of 100 rpm for 3 minutes. The washed membrane was air-dried at room temperature. The dried membrane was re-stretched by a tenter-stretching machine to a magnification of 1.4 folds in TD while being preheated at 100°C. The re-stretched membrane held by a tenter was heat-set at 125°C for 30 seconds, to produce a microporous PE membrane.

### Example 2

A microporous PE membrane was produced in the same manner as in Example 1, except that the second-stretched membrane held by a tenter was subjected to heat-setting and annealing both at 124°C such that its length in TD became 110% of that before second stretching, and that the heat-setting was then conducted at 124°C for 30 seconds.

### Example 3

A microporous PE membrane was produced in the same manner as in Example 1, except that the second stretching magnification was 1.2 folds, and that the heat-setting temperature was 124°C.

### Example 4

A microporous PE membrane was produced in the same manner as in Example 1, except that the second stretching was conducted to a magnification of 1.3 folds in MD

### Example 5

A microporous PE membrane was produced in the same manner as in Example 1, except that the second stretching was conducted to a magnification of 1.3 folds in MD, that the second-stretched membrane held by a tenter was subjected to heat-setting and annealing at 124°C such that its length in MD became 110% of that before second stretching, and that the heat-setting was then conducted at 124°C for 30 seconds.

### Example 6

A microporous PE membrane was produced in the same manner as in Example 1, except that the first stretching temperature was 115°C, that the second stretching was simultaneous biaxial stretching to magnifications of 1.2 x 1.4 folds (MD x TD) at a speed of 15%/second in both MD and TD at 115°C, and that the heat-setting temperature was 128°C.

### Example 7

A microporous PE membrane was produced in the same manner as in Example 1 except that HDPE having Mw/Mn of 8.6 was used, that the thickness of the gel molding was 1.4 mm, that the first stretching temperature was 116°C, that the second stretching was conducted to a magnification of 1.2 folds at a speed of 20%/second, that heat-setting and annealing were conducted at 126° such that its length in TD became 95% of that before second stretching, and that the heat-setting treatment was then conducted at 126°C for 30 seconds, as shown in Table 1.

### Comparative Example 1

A microporous PE membrane was produced in the same manner as in Example 1, except that the second stretching temperature was 125°C.

### Comparative Example 2

A microporous PE membrane was produced in the same manner as in Example 1, except that the second stretching temperature was 125°C, and that the second-stretched membrane held by a tenter was annealed at 125°C for 30 seconds such that its length in TD became 90% of that before second stretching, and then heat-set.

### Comparative Example 3

A microporous PE membrane was produced in the same manner as in Example 1, except that the second stretching temperature was 125°C, and that the second stretching speed was 1%/second.

### Comparative Example 4

A microporous PE membrane was produced in the same manner as in Example 1, except that the first stretching temperature was 115°C, and that the second stretching was not conducted.

### Comparative Example 5

An attempt was conducted to produce a microporous PE membrane in the same manner as in Example 1, except that the first stretching temperature was 115°C, that the second stretching was conducted to a magnification of 3.0 folds in MD at a speed of 20%/second at 110°C. However, only a broken microporous PE membrane was obtained.

### Comparative Example 6

A microporous PE membrane was produced in the same manner as in Example 1, except that the second stretching speed was 1%/second.

The properties of the microporous PE membranes of Examples 1 to 7 and Comparative Examples 1 to 4 and 6 were measured by the following methods. The results are shown in Table 1.
(1) Thickness: Measured by a contact thickness meter available from Mitutoyo Corporation.
(2) Air permeability (Gurley value): Measured according to JIS P8117 (converted to the value at 20-µm thickness).
(3) Porosity: Measured by a weight method.
(4) Pin puncture strength: The maximum load was measured when the microporous membrane was pricked with a needle of 1 mm in diameter (0.5 mm R) at a speed of 2 mm/second.
(5) Tensile rupture strength: Measured on a 10-mm-wide rectangular test piece according to ASTM D882.
(6) Tensile rupture elongation: Measured on a 10-mm-wide rectangular test piece according to ASTM D882.
(7) Heat shrinkage ratio: The shrinkage ratios of microporous membranes in MD and TD were measured three times when exposed to 105°C for 8 hours, and averaged to determine the heat shrinkage.
(8) Difference of properties in TD: The air permeability of the microporous membrane was measured at 15 points with an approximately equal interval in TD. The air permeability difference (%) was represented by a difference between the maximum value and the minimum value of air permeabilities measured, assuming that the minimum value was 100%. The air permeability ratio was represented by a ratio of the above-mentioned maximum value to the above-mentioned minimum value.
(9) Compression resistance: The membrane was sandwiched by a pair of press plates having high-flat surfaces, and pressed by a pressing machine at 90°C and 2.2 MPa for 5 minutes, to subject the membrane to even heat compression. The thickness and air permeability (post-heat-compression air permeability) of the heat-compressed membrane were measured by the above-mentioned method. The thickness change ratio was calculated relative to the thickness (100%) of the membrane before heat compression.

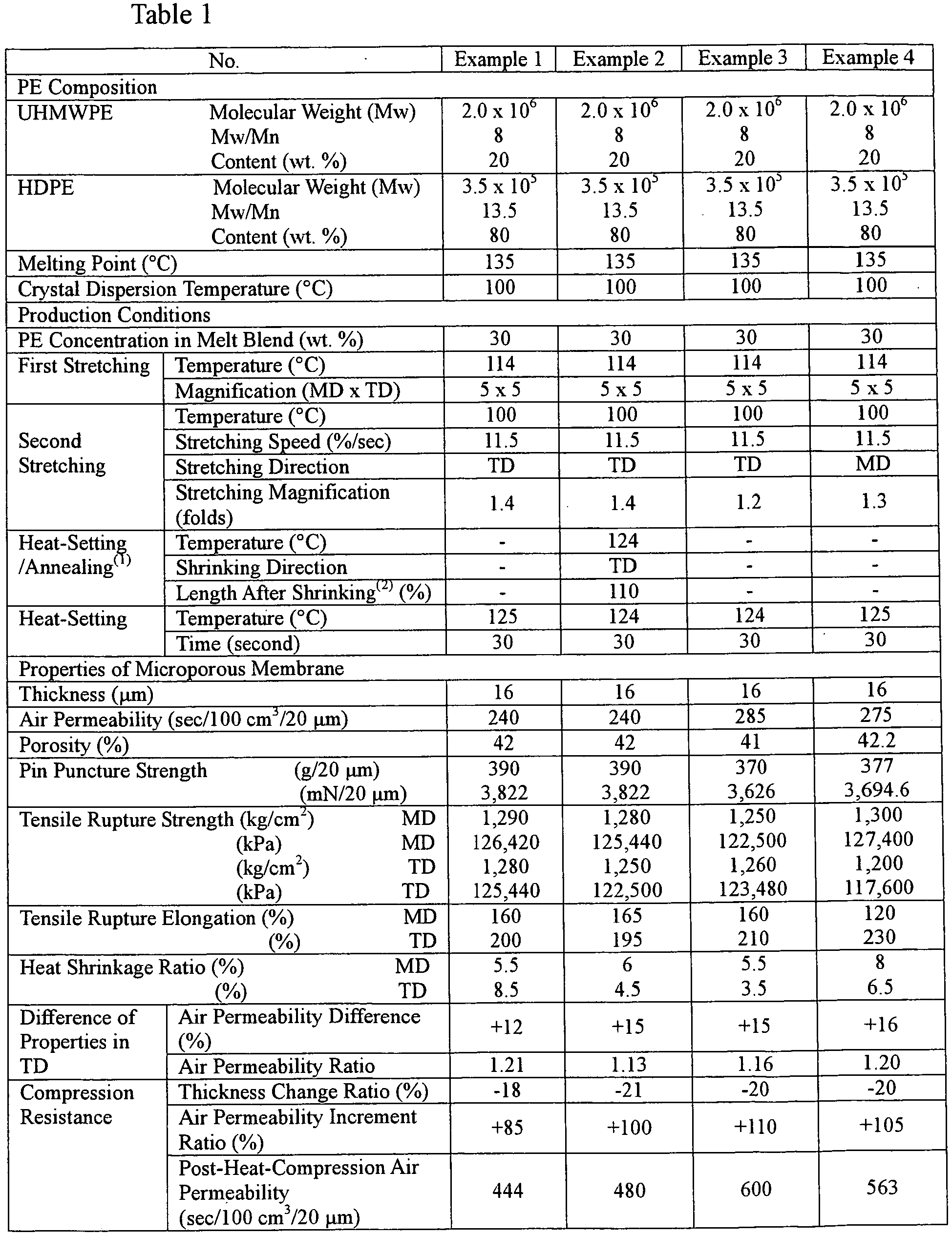

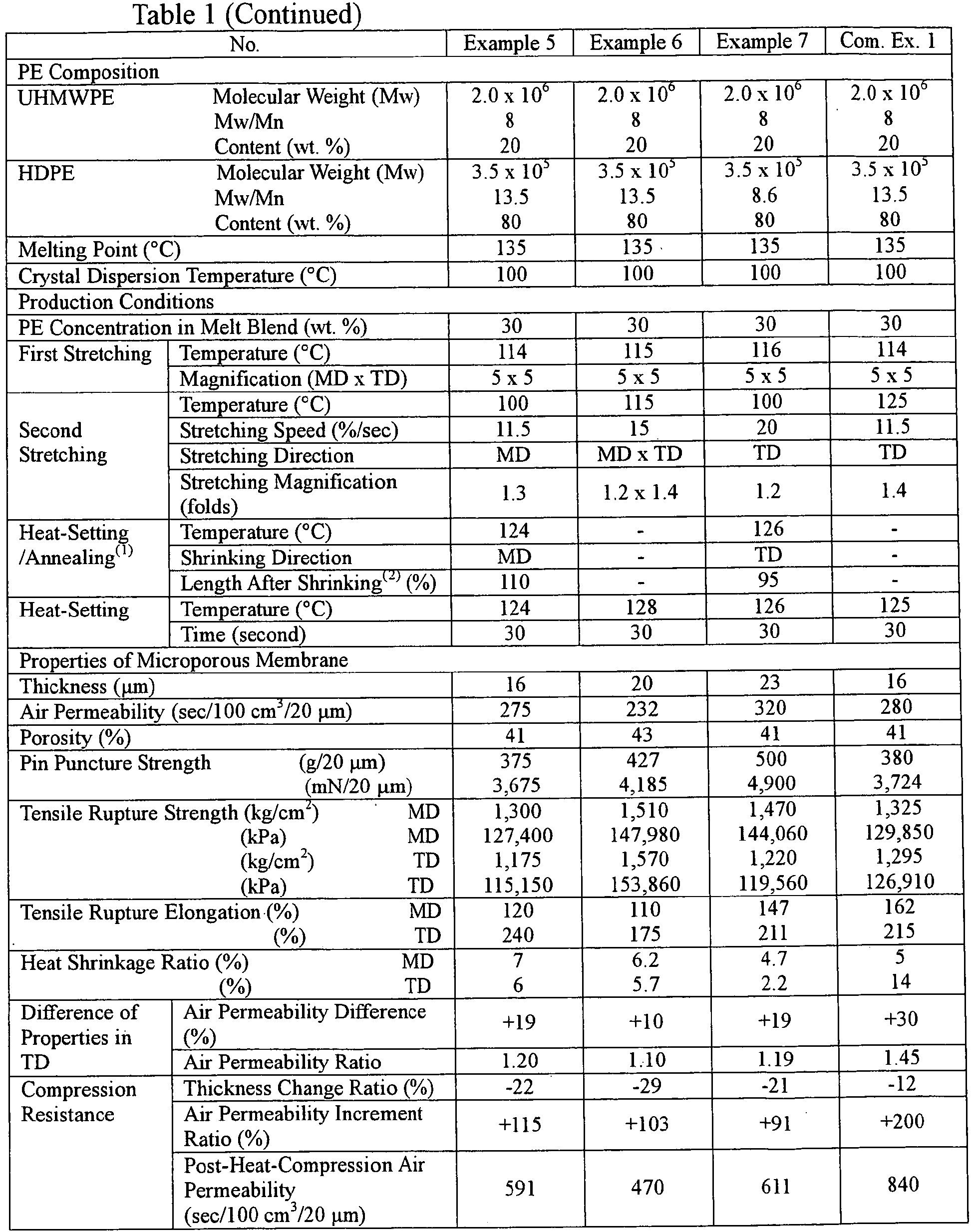

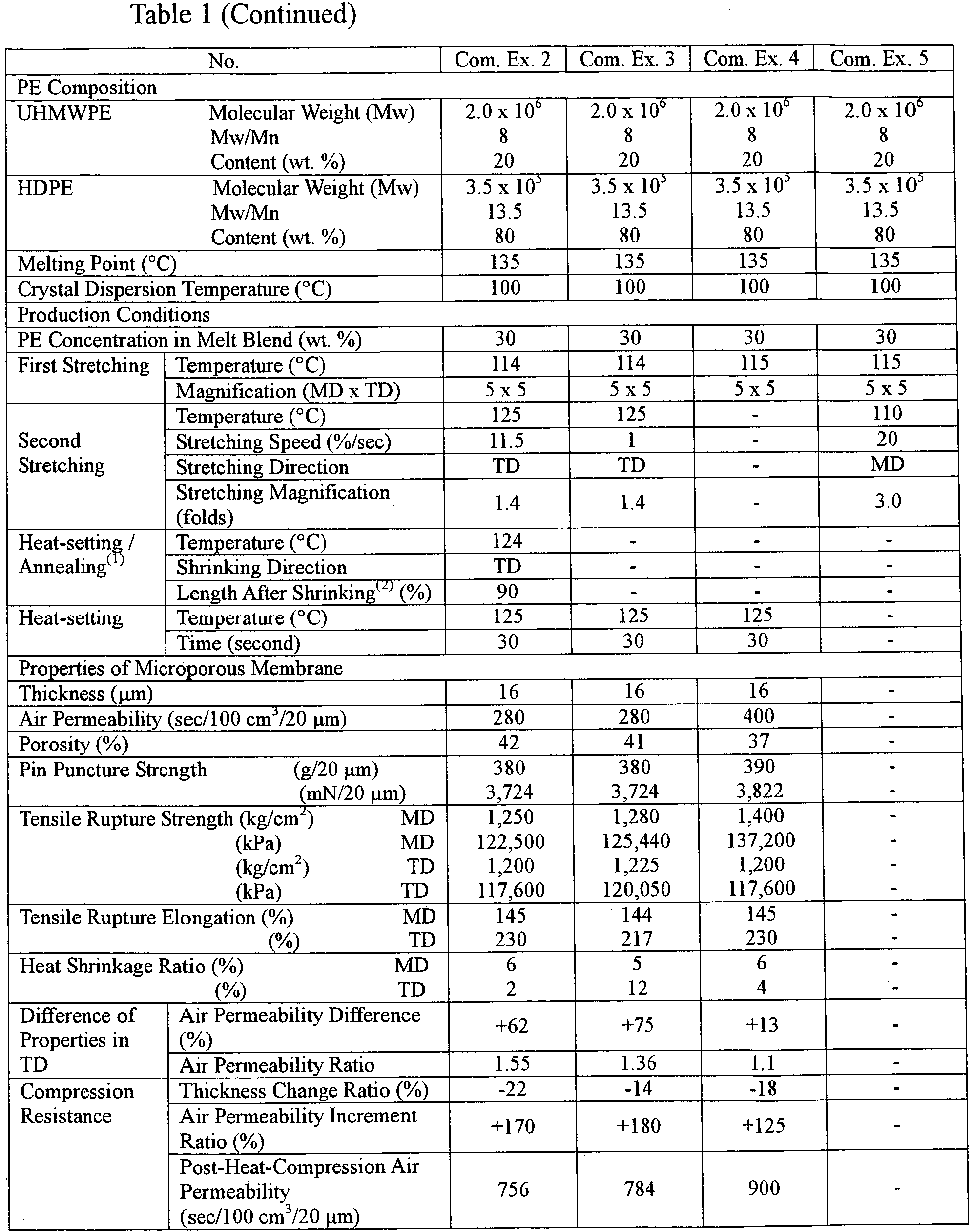

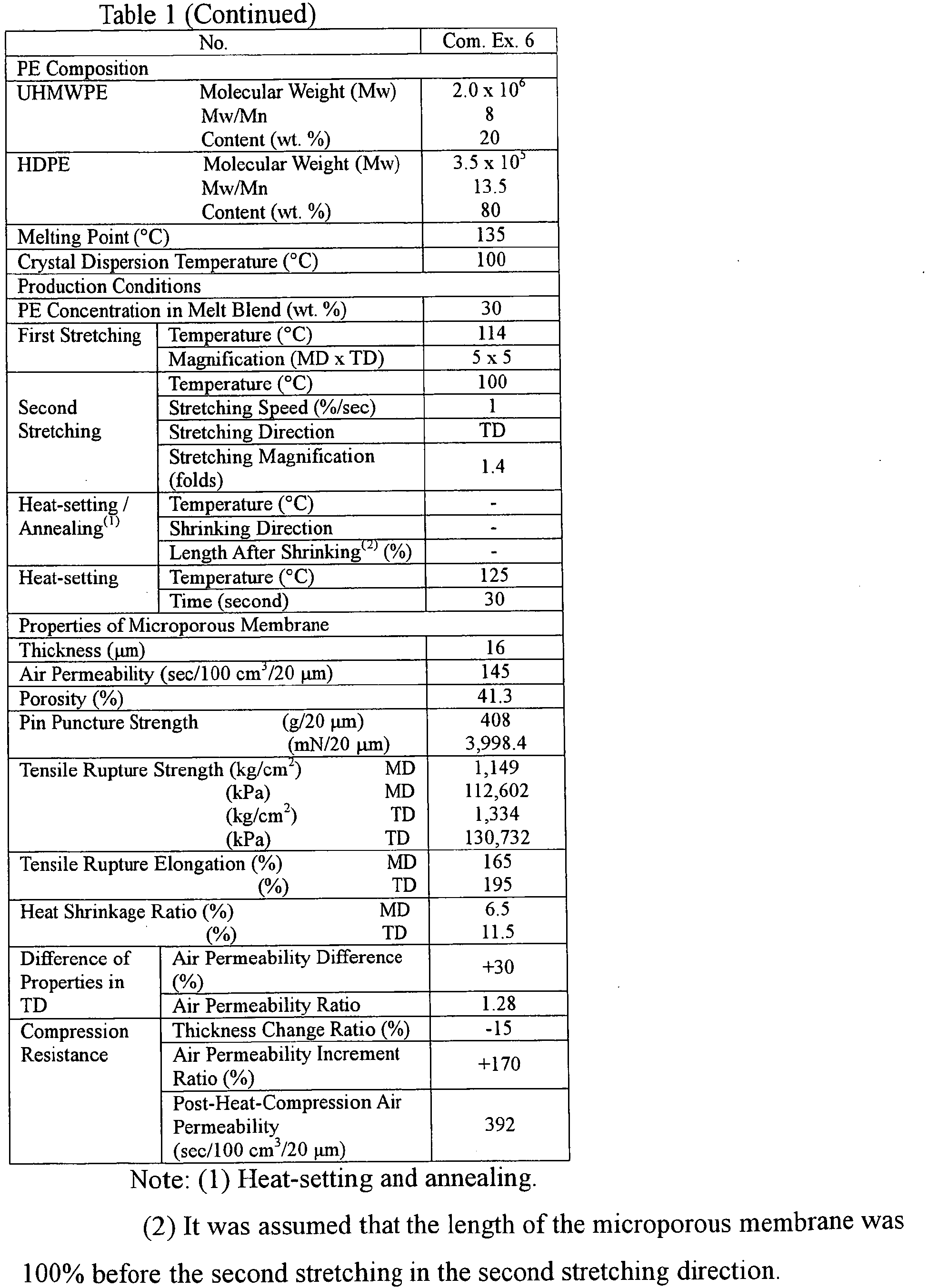

As is clear from Table 1, the microporous PE membranes of Examples 1 to 9 had well-balanced air permeability, porosity, pin puncture strength, tensile rupture strength, tensile rupture elongation and heat shrinkage resistance, as well as small air permeability differences in a width direction when stretched, large thickness change ratios after heat compression, small air permeability after heat compression (post-heat-compression air permeability), and a small air permeability increment ratios after heat compression, because the second stretching temperature was equal to or lower than the crystal dispersion temperature of PE +20°C, and because the second stretching speed was 10 %/second or more in each stretching direction. On the other hand, the second stretching temperature in Comparative Examples 1 to 3 was higher than the crystal dispersion temperature +20°C. In addition, the second stretching speed in Comparative Example 3 was less than 3%/second. The second stretching was not conducted in Comparative Example 4. Therefore, Air permeability increment ratios and air permeability after heat compression (post-heat-compression air permeability) were clearly larger in Comparative Examples 1 to 4 than in Examples 1 to 7. Comparative Examples 1 to 3 clearly had large air permeability differences and air permeability ratios in a width direction. A thickness change ratio after heat compression was poorer in Comparative Examples 1 and 3 than in Examples 1 to 7. Comparative Example 2 had large air permeability difference and air permeability ratio particularly in a width direction, because annealing was conducted such that the length of the microporous membrane became less than 91% of that before second stretching. The membrane was broken in Comparative Example 5 because the second stretching magnification exceeded 2.5 folds. Comparative Example 6 clearly had large width-direction air permeability difference and air permeability increment ratio after heat compression, because the second stretching speed was less than 3%/second.

### EFFECT OF THE INVENTION

A microporous polyolefin membrane having excellent compression resistance can be produced stably and efficiently by the method of the present invention. Because this microporous membrane is particularly subjected to small air permeability change and large deformation by heat compression, battery separators formed by this microporous membrane have excellent cyclability, and improve battery life and productivity. This microporous membrane can be used for various filters, too.

## Claims

1. A method for producing a microporous polyolefin membrane comprising the steps of (1) melt-blending a polyolefin and a membrane-forming solvent, (2) extruding the resultant melt blend through a die, (3) cooling the extrudate to form a gel molding, (4) stretching the gel molding at least uniaxially, (5) removing the membrane-forming solvent, and (6) re-stretching the resultant membrane at least in transverse direction, wherein the re-stretching temperature is equal to or lower than the crystal dispersion temperature of the polyolefin +20 °C, the re-stretching speed is 10 %/second or more and 50 %/second or less in the stretching direction, and the re-stretching magnification is 1.1 to 2.5 fold in a re-stretching direction.

2. The method for producing a microporous polyolefin membrane according to claim 1, wherein the membrane is heat-set at a temperature equal to or lower than the melting-point of the polyolefin +10 °C after the re-stretching.

3. The method for producing a microporous polyolefin membrane according to claim 1 or 2, wherein annealing is conducted after said re-stretching such that the length of the membrane in the re-stretching direction is 91 % or more of that before the re-stretching.

4. A microporous polyolefin membrane having a thickness change ratio after heat compression at 2.2 MPa and 90 °C for 5 minutes of 15 % or more, an air permeability measured according to JIS P8117 after said heat compression of 700 seconds/100 cm³/20 µm or less, and an air permeability increment ratio of 120 % or less after said heat compression.

5. A microporous polyolefin membrane according to claim 4, having an air permeability difference in transverse direction of 20 % or less, said air permeability difference being represented by the difference between the maximum and minimum values of air permeability measured at 15 points of approximately equal interval in transverse direction of the membrane, the minimum value representing 100 %.

6. A microporous polyolefin membrane according to claim 4 or 5, having an air permeability ratio of 1.5 or less, said air permeability ratio being represented by the ratio of the maximum value to the minimum value of the air permeability measured at 15 points of approximately equal interval in transverse direction of the membrane, the minimum value representing 100 %.

7. A microporous polyolefin membrane according to claim 4, 5 or 6, having an air permeability measured according to JIS P8117 of 20 to 400 seconds/100 cm³/20 µm, a porosity of 25 to 80 %, a pin puncture strength of 1,500 mN/20 µm or more, a tensile rupture strength of 20,000 kPa or more in both machine direction and transverse direction, a tensile rupture elongation of 100% or more in both machine direction and transverse direction, and a heat shrinkage ratio after exposure to 105 °C for 8 hours of 15 % or less in both machine direction and transverse direction.

## Patentansprüche

1. Verfahren zum Herstellen einer mikroporösen Polyolefinmembran mit folgenden Schritten: (1) Schmelzmischen eines Polyolefins und eines membranbildenden Lösungsmittels, (2) Extrudieren der sich ergebenden Schmelzmischung durch ein Formwerkzeug, (3) Kühlen des Extrudats unter Bildung eines Gel-Formkörpers, (4) zumindest uniaxiales Strecken des Gel-Formkörpers, (5) Entfernen des membranbildenden Lösungsmittels, und (6) erneutes Strecken der sich ergebenden Membran in zumindest transversaler Richtung, wobei die Temperatur beim erneuten Strecken gleich oder niedriger als die Kristall-Dispersionstemperatur des Polyolefins +20 °C ist, die Geschwindigkeit des erneuten Streckens 10%/Sekunde oder mehr und 50%/Sekunde oder weniger in der Streckrichtung beträgt und die Vergrößerung beim erneuten Strecken das 1,1-fache bis zum 2,5-fachen in Richtung des erneuten Streckens beträgt.

2. Verfahren zum Herstellen einer mikroporösen Polyolefinmembran nach Anspruch 1, wobei die Membran nach dem erneuten Strecken bei einer Temperatur wärmebehandelt wird, die gleich oder niedriger als der Schmelzpunkt des Polyolefins +10°C ist.

3. Verfahren zum Herstellen einer mikroporösen Polyolefinmembran nach Anspruch 1 oder 2, wobei nach dem erneuten Strecken ein Tempern ausgeführt wird, so dass die Länge der Membran in Richtung des erneuten Streckens 91% oder mehr derjenigen vor dem erneuten Strecken beträgt.

4. Mikroporöse Polyolefinmembran mit einem Dicken-Änderungsverhältnis von 15% oder mehr nach Wärmekompression bei 2,2 MPa und 90 °C über fünf Minuten, einer nach JIS P8117 gemessenen Luftpermeabilität von 700 Sekunden/100 cm³/20 µm oder weniger nach der Wärmekompression und mit einem Luftpermeabilitäts-Erhöhungsverhältnis von 120% oder weniger nach der Wärmekompression.

5. Mikroporöse Polyolefinmembran nach Anspruch 4 mit einer Luftpermeabilitätsdifferenz in transversaler Richtung von 20% oder weniger, wobei die Luftpermeabilitätsdifferenz durch die Differenz zwischen dem maximalen und dem minimalen Wert der Luftpermeabilität ausgedrückt ist, die an 15 in transversaler Richtung der Membran etwa gleich beabstandeten Punkten gemessen ist, und wobei der minimale Wert 100% darstellt.

6. Mikroporöse Polyolefinmembran nach Anspruch 4 oder 5 mit einem Luftpermeabilitätsverhältnis von 1,5 oder weniger, wobei das Luftpermeabilitätsverhältnis durch das Verhältnis des maximalen zum minimalen Wert der Luftpermeabilität ausgedrückt ist, die an 15 in transversaler Richtung der Membran etwa gleich beabstandeten Punkten gemessen ist, und wobei der minimale Wert 100% darstellt.

7. Mikroporöse Polyolefinmembran nach Anspruch 4, 5 oder 6 mit einer nach JIS P8117 gemessenen Luftpermeabilität von 20 bis 400 Sekunden/100 cm³/20 µm, einer Porosität von 25 bis 80%, einer Durchstichfestigkeit von 1500 mN/20 µm oder mehr, einer Zugrissfestigkeit von 20000 kPa oder mehr sowohl in Maschinenrichtung als auch in transversaler Richtung, einer Zugrisslängung von 100% oder mehr sowohl in Maschinenrichtung als auch in transversaler Richtung und einem Wärmeschrumpfverhältnis nach achtstündiger Exposition bei 105 °C von 15% oder weniger sowohl in Maschinenrichtung als auch in transversaler Richtung.

## Revendications

1. Procédé de production d'une membrane polyoléfinique microporeuse comprenant les étapes de (1) mélange en fusion d'une polyoléfine et d'un solvant de formation de membrane, (2) extrusion du mélange en fusion résultant à travers une filière, (3) refroidissement de l'extrudat pour former un moulage en gel, (4) étirage du moulage en gel au moins uni-axialement, (5) élimination du solvant de formation de membrane, et (6) ré-étirage de la membrane résultante au moins dans le sens transversal, dans lequel la température de ré-étirage est égale ou inférieure à la température de dispersion de cristaux de la polyoléfine +20°C, la vitesse de ré-étirage est 10%/seconde ou plus et 50%/seconde ou moins dans le sens d'étirage, et le grandissement à l'étirage est 1,1 à 2,5 fois dans un sens de ré-étirage.

2. Procédé de production d'une membrane polyoléfinique microporeuse selon la revendication 1, dans lequel la membrane est fixée à la chaleur à une température égale ou inférieure au point de fusion de la polyoléfine +10°C après le ré-étirage.

3. Procédé de production d'une membrane polyoléfinique microporeuse selon la revendication 1 ou 2, dans lequel un recuit est conduit après ledit ré-étirage de telle manière que la longueur de la membrane dans le sens de ré-étirage est 91% ou plus de celle avant le ré-étirage.

4. Membrane polyoléfinique microporeuse ayant un rapport de changement d'épaisseur après compression à la chaleur à 2,2 MPa et 90°C pendant 5 minutes de 15% ou plus, une perméabilité à l'air mesurée conformément à JIS P8117 après ladite compression à la chaleur de 700 secondes/100 cm³/20 µm ou moins, et un rapport d'incrémentation de perméabilité à l'air de 120% ou moins après ladite compression à la chaleur.

5. Membrane polyoléfinique microporeuse selon la revendication 4, ayant une différence de perméabilité à l'air dans le sens transversal de 20% ou moins, ladite différence de perméabilité à l'air étant représentée par la différence entre les valeurs maximum et minimum de perméabilité à l'air mesurées en 15 points d'intervalle approximativement égal dans le sens transversal de la membrane, la valeur minimum représentant 100%.

6. Membrane polyoléfinique microporeuse selon la revendication 4 ou 5, ayant un rapport de perméabilité à l'air de 1,5 ou moins, ledit rapport de perméabilité à l'air étant représenté par le rapport de la valeur maximum à la valeur minimum de la perméabilité à l'air mesurées en 15 points d'intervalle approximativement égal dans le sens transversal de la membrane, la valeur minimum représentant 100%.

7. Membrane polyoléfinique microporeuse selon la revendication 4, 5 ou 6, ayant une perméabilité à l'air mesurée conformément à JIS P8117 de 20 à 400 secondes/100 cm³/20 µm, une porosité de 25 à 80%, un résistance à la perforation par aiguille de 1 500 mN/20 µm ou plus, une résistance à la rupture en traction de 20 000 kPa ou plus dans le sens machine et le sens transversal, un allongement à la rupture en traction de 100% ou plus dans le sens machine et le sens transversal, et un rapport de retrait à la chaleur après exposition à 105°C pendant 8 heures de 15% ou moins dans le sens machine et le sens transversal.
